# EUROPÄISCHE PATENTSCHRIFT

(11) **EP 2 564 685 B1**
(45) Veröffentlichungstag und Bekanntmachung des Hinweises auf die Patenterteilung: **09.08.2017**
(21) Anmeldenummer: 12170656.8
(22) Anmeldetag: 04.06.2012
(51) Int. Cl.: A01D 75/20, A01D 75/18, A01D 43/08

(54) **Landwirtschaftliche Erntemaschine**
Agricultural harvester
Moissonneuse agricole

(30) Priorität: 02.09.2011 DE 102011053214
(43) Veröffentlichungstag der Anmeldung: 06.03.2013
(73) Patentinhaber: CLAAS Selbstfahrende Erntemaschinen GmbH, 33428 Harsewinkel (DE)
(72) Erfinder: Claussen, Frank, 33428 Harsewinkel (DE); Surmann, Thomas, 59302 Oelde-Stromberg (DE)

(56) Entgegenhaltungen:
- EP-A1- 1 523 874
- EP-A2- 1 762 134
- DE-A1- 10 244 822

## Beschreibung

Die Erfindung betrifft eine landwirtschaftliche Erntemaschine gemäß dem Oberbegriff des Anspruchs 1.

Landwirtschaftliche Erntemaschinen wie beispielsweise Feldhäcksler, Mähdrescher oder Ballenpressen fahren beim Ernteeinsatz - selbst angetrieben oder gezogen - über ein Feld, um aufgenommenes Erntegut mit zumindest einem Arbeitsaggregat zu bearbeiten und zu fördern. Zur Erzielung einer hohen Maschinenauslastung findet die Ernte heutzutage bei Tag und bei Nacht statt, wobei mit steigenden Vorfahrtgeschwindigkeiten und wachsenden Arbeitsbreiten laufend versucht wird, die Produktivität des landwirtschaftlichen Ernteprozesses zu erhöhen. Die Bediener der Maschinen müssen dabei viel Aufmerksamkeit für die Koordinierung der komplexen Arbeitsarbeitsabläufe aufbringen.

Neben einem Anbauort für zu erntende Pflanzen ist das Feld auch Lebensraum von Tieren. Während der Erntefahrt haben die Maschinenbediener landwirtschaftlicher Erntemaschinen daher - neben der Koordinierung des Ernteprozesses - streng darauf zu achten, Kollisionen mit im Feld befindlichen Tieren oder gar Menschen zu vermeiden, da die Erntemaschinen aufgrund ihrer scharkantigen und leistungsstark angetriebenen Arbeits- und Förderaggregate für Lebewesen in der Regel eine tödliche Gefahr darstellen. Eine im tragischen Kollisionsfall durch die Arbeits- und Förderaggregate stattfindende Verarbeitung der Lebewesen führt darüber hinaus zu Verunreinigungen des Ernteguts, die in der Regel eine Untauglichkeit des Ernteguts zur Verfütterung verursachen. Beispielsweise verenden Milchkühe bei der Einnahme von mit Tierkadaver verseuchter Silage an Botulismus. Bereits ein von einem Feldhäcksler erfasstes Reh kann ein ganzes Silo für die Verfütterung wertlos machen, da es schwierig ist, den verunreinigten Teil des Ernteguts im Silo ausfindig zu machen.

Zur Vermeidung von Kollisionen schlägt beispielsweise die DE 196 08 014 A1 vor, an einem Ballenwickler einen Infrarotsensor zur Wärmeerkennung von Lebewesen anzubringen, der zur Abschaltung des Ballenwicklers führt. In der DE 102 44 822 A1 wird vorgeschlagen, an einem Mähdrescher in einem Gefahrenbereich einen Sensor anzubringen, der Lebewesen nachweist und den Mähdrescher ggf. anhält.

Mit den Sensoren der beschriebenen Erntemaschinen können Lebewesen nicht in jedem Fall erkannt werden. Zum einen ist der Erfassungsbereich von Sensoren stets begrenzt, zum anderen sind Tiere im Pflanzenbestand oft schwer erkennbar, weil sie sich verstecken oder laufend plötzlich vor der Erntemaschine auftauchen. Weiterhin führen wechselnde Einsatzbedingungen zu Beeinträchtigungen der Zuverlässigkeit der Sensoren. Gemäß praktischer Erfahrungen ist jedenfalls - trotz steter Bemühungen - nicht auszuschließen, dass Lebewesen von Erntemaschinen erfasst werden. Dabei entstehen unter anderem wirtschaftliche Schäden aufgrund von Wertverlusten des Ernteguts.

Daneben werden im Vorfeld der Ernte immer wieder Sabotagehandlungen vorgenommen, bei denen Dritte Chemikalien (z.B. Haushaltsreiniger) am oder im Pflanzenbestand verstecken. Die Chemikalien können auf diesem Wege unbemerkt ins Erntegut gelangen. Insbesondere für die spätere Verwendung des geernteten Guts in Biogasanlagen stellen die Chemikalien eine Gefahr dar, da sie die empfindlichen Bakterien im Stoffkreislauf der Anlage leicht beeinflussen, so dass Störungen der Biogasproduktion auftreten.

Die Druckschrift EP 1 523 874 A1 offenbart eine Messeinrichtung zur Messung von Inhaltsstoffen in Erntegut, die einen vorzugsweise im Nahinfrarotbereich arbeitenden optischen Sensor umfassen kann, mit dem eine Materialanalyse durchführbar ist.

Vor diesem Hintergrund ist es eine Aufgabe der vorliegenden Erfindung, eine Erntemaschine der eingangs genannten Art anzugeben, mit der sich wirtschaftliche Schäden begrenzen lassen, die durch unerwünschte Ereignisse bei der Ernte, wie unter anderem Kollisionen mit Lebewesen oder Sabotagemaßnahmen am Pflanzenbestand, verursacht werden.

Die genannte Aufgabe wird gelöst durch eine landwirtschaftliche Erntemaschine gemäß dem Anspruch 1. Demnach zeichnet sich diese durch eine Sensoranordnung aus, die im bearbeiteten Erntegut enthaltene Gefahrenstoffe erkennt.

Erfindungsgemäß wurde zunächst erkannt, dass es mit technischen Mitteln - unter vertretbarem Aufwand - bisher nicht möglich ist, Kollisionen mit Lebewesen während der Erntefahrt völlig auszuschließen. Um jedoch zumindest eine weitere Gefährdung von in der Nahrungskette folgenden Lebewesen, insbesondere den mit Erntegut gefütterten Tieren und/oder eine Gefährdung nachgelagerter technischer Prozesse auszuschließen, verfügt die erfindungsgemäße Erntemaschine über eine Sensoranordnung, mit der Gefahrenstoffe im bearbeiteten Erntegut erkannt werden. Als Gefahrenstoff kann dabei grundsätzlich jeder Stoff angesehen werden, der im weiteren Sinne eine Gefährdung für das geerntete Gut darstellt, insbesondere bei dessen späterer Verwendung. Dies ist beispielsweise der Fall, wenn das Erntegut durch den enthaltenen Gefahrenstoff hinsichtlich der Verfütterung an Tiere unverträglich wird oder wenn der Gefahrenstoff die Produktion von Biogas stört. Die erfindungsgemäß vorgesehene Sensoranordnung trägt durch eine Erkennung derartiger Gefahrenstoffe zu einer Verhinderung oder zumindest einer Minderung so bedingter wirtschaftlicher Schäden bei, indem dem Maschinenbediener ermöglicht wird, das als verunreinigt erkannte Erntegut der weiteren Produktionskette zu entziehen. Zweckmäßigerweise handelt es sich bei den Gefahrenstoffen also um Substanzen, die mittels der Sensoranordnung erkennbar sind. Die zuvor genannte Aufgabe wird somit gelöst.

Wie bereits ausgeführt, kann es sich bei einem Gefahrenstoff im genannten Sinne um eine das Erntegut hinsichtlich der Verfütterung an Tiere unverträglich machende Substanz handeln. Hierzu können beispielsweise tierische Substanzen zählen, d.h. jedwede einem tierischen (und damit im naturwissenschaftlichen Sinne auch dem menschlichen) Organismus entstammende Substanzen wie insbesondere dessen Fleisch, Blut und/oder Knochen. Daneben kann auch ein Pilzbefall des Ernteguts zu dessen späterer Unverträglichkeit führen, wobei insbesondere als Stoffwechselprodukt von Schimmelpilzen bekannte Mykotoxine schon in geringer Dosis für Wirbeltiere giftige Wirkung zeigen und somit als Gefahrenstoff anzusehen sind.

Weiterhin können als Gefahrenstoff im Sinne der Erfindung chemische Substanzen angesehen werden, die sich in irgendeiner Weise wertmindernd auf die Verwendung des Ernteguts auswirken. Dies ist insbesondere der Fall, wenn die chemische Substanz die Produktion von Biogas beeinträchtigt.

Prinzipiell können zur Gefahrenstofferkennung verschiedene Arten Sensoren zum Einsatz kommen. Gemäß einer vorteilhaften Ausgestaltung weist die Sensoranordnung einen optischen Sensor auf, der das bearbeitete Erntegut optisch erfasst, um daraus Informationen über das Vorhandensein eines Gefahrenstoffs abzuleiten. Ein optische Erfassung bietet den Vorteil, dass das Erntegut berührungslos untersucht werden kann. Eine Anordnung der Sensoranordnung - zumindest von deren optisch erfassenden Elementen - am Gutstrom ermöglicht vorteilhaft eine kontinuierliche Messung, so dass das Vorhandensein von Gefahrenstoffen und/oder diesbezügliche Veränderungen schnell erkennbar sind. Zweckmäßig verfügt die Sensoranordnung weiterhin über eine Auswerteinheit, die aus dem Sensorsignal Informationen über das Vorhandensein von Gefahrenstoffen ableiten kann.

Eine Erkennung von Gefahrenstoffen wird mit einer Sensoranordnung durchgeführt, die das Erntegut im nahen Infrarotbereich (NIR) spektroskopisch analysieren kann. Das Erntegut wird dazu ganz gezielt - beispielsweise durch eine entsprechende Lichtquelle - kurzwelliger Infrarotstrahlung ausgesetzt, wodurch bestimmte Molekülbindungen des bestrahlten Guts zu Schwingungen angeregt werden. Mittels einer geeigneten Detektionseinrichtung und einer damit verbundenen Auswerteinheit erfolgt eine Analyse der reflektierten Strahlung. Insbesondere anhand eines Vergleichs mit bekannten Daten ist die Auswerteinheit in der Lage, bestimmte im Erntegut enthaltene Gefahrenstoffe, wie beispielsweise Tierblut oder bekannte chemische Substanzen, zu erkennen.

Zunächst kann sich die Auswertung darauf beschränken, dass die abgeleitete Information das Vorhandensein eines Gefahrenstoffs als solches beinhaltet. Diese rein qualitative Information kann bereits ausreichen, um schnellstmöglich einen drohenden Schaden abzuwenden.

Gemäß einer vorteilhaften Weiterbildung beinhaltet die Information auch die Art des erkannten Gefahrenstoffs. Dem Maschinenbediener wird so beispielsweise mitgeteilt, dass im Erntegut eine bestimmte chemische Substanz oder ein bestimmtes Tierblut enthalten ist. Der Maschinenbediener kann aus der Art des Gefahrenstoffs auf ein stattgefundenes Ereignis (Sabotageaktion, Kollision mit einem Tier, Pilzbefall etc.) schließen und eine geeignete Maßnahme einleiten.

In weiterhin bevorzugter Weise beinhaltet die abgeleitete Information die Menge des Gefahrenstoffs im Erntegut. Hierbei kann es sich um eine relative (im Sinne einer Konzentration beispielsweise als Gewichts- oder Volumenanteil vom aktuell erfassten Erntegut) oder eine absolute Angabe handeln, wobei eine absolute Mengenangabe beispielsweise durch Integration der relativen Menge über einen bekannten Erntegutdurchsatz bestimmbar wäre. Mengenangabe können den Maschinenbediener bei der Einschätzung der von der Verunreinigung ausgehenden Gefahr unterstützen.

Bei der zur Gefahrenerkennung eingesetzten Sensoranordnung kann es sich bevorzugt um eine Sensoranordnung handeln, die daneben auch zur Erkennung von Eigenschaften (z.B. Feuchte, Proteingehalt, Rohfasergehalt etc.) des Ernteguts selbst nutzbar ist. Der konstruktive Aufwand wäre durch eine derartige doppelte Nutzung deutlich verringert.

Bevorzugt ist der Sensoranordnung weiterhin eine Ausgabeeinrichtung zugeordnet, die betreibbar ist, eine das Vorhandensein des erkannten Gefahrenstoffs betreffende Information an einen Maschinenbediener auszugeben. Die Ausgabe könnte dabei als reine Information beispielsweise über ein für den Maschinenbediener sichtbares Display in der Fahrerkabine erfolgen. Um der Information den Charakter einer wichtigen Meldung zu verleihen, könnte diese bevorzugt auch akustisch ausgegeben werden und/oder optisch besonders hervorgehoben als Warnmeldung (in Signalfarbe und entsprechender Größe) erscheinen.

Eine vorteilhafte Weiterbildung sieht vor, dass die Ausgabeeinrichtung bei Überschreiten einer kritischen Menge eines erkannten Gefahrenstoffs ein Signal an den Maschinenbediener ausgibt. In diesem Fall würde der Maschinenbediener erst dann per Signal gewarnt, wenn eine kritische Menge des Gefahrenstoffs überschritten ist, wobei die dafür zu erreichende (absolute oder relative) Menge bevorzugt vom Bediener einstellbar ist.

Gemäß einer vorteilhaften Ausgestaltung kann ergänzend oder alternativ vorgesehen sein, dass bei Überschreiten einer kritischen Menge eines erkannten Gefahrenstoffs eine maschinenbezogene Maßnahme ausgelöst wird. Hier sind unterschiedliche Maßnahmen denkbar, die bevorzugt abhängig von der Art und/oder Menge des erkannten Gefahrenstoffs getroffen werden. Beispielsweise könnte ein sofortiges Anhalten von Aggregaten (z.B. beim Feldhäcksler oder Mähdrescher: Einzugsaggregat, Vorsatzgerät, Fahrantrieb) der Erntemaschine ausgelöst werden, um die Förderung von Erntegut zu unterbrechen. Die Schnitthöhe könnte verändert werden, beispielsweise um am Boden befindliche Gefahrenstoffe nicht mehr einzuziehen. In vorteilhafter Weiterbildung könnte in Reaktion auf eine Gefahrenstofferkennung automatisch eine gezielte Zugabe von chemischen Substanzen und/oder Siliermittel zum Erntegut eingeleitet werden, um die negative Wirkung des Gefahrenstoffs zu mindern oder ganz zu kompensieren. Die Einleitung derartiger Maßnahmen könnte vorteilhaft in ein bordeigenes Maschinenüberwachungssystem der Erntemaschine integriert sein und so automatisch ausgelöst werden.

Eine bevorzugte Weiterbildung der Erntemaschine sieht zudem eine Einrichtung vor, die betreibbar ist, das Vorhandensein von Gefahrenstoffen betreffende Informationen ortsbezogen zu dokumentieren. Eine solche Einrichtung könnte beispielsweise auf ein satellitengestütztes (oder sonstiges) Ortungssystem zugreifen, um die Informationen entsprechend zuzuordnen. In praktischer Anwendung wäre es denkbar, auf diese Weise den Fund- bzw. Kollisionsort eines Tieres genau angeben zu können, beispielsweise um einen zuständigen Landwirt, Förster oder Jäger über den Verlust im Tierbestand bzw. einen Fund zu informieren.

Die Erfindung wird im Folgenden unter Hinweis auf die beigefügten Figuren näher erläutert. Daraus ergeben sich auch weitere Einzelheiten und Vorteile der Erfindung. Es zeigen:
- Fig. 1: eine schematische Seitenansicht eines selbstfahrenden Feldhäckslers vor der Kollision mit einem Reh,
- Fig. 2: eine schematische Seitenansicht des selbstfahrenden Feldhäckslers gemäß Fig. 1 vor der Aufnahme einer chemischen Substanz.

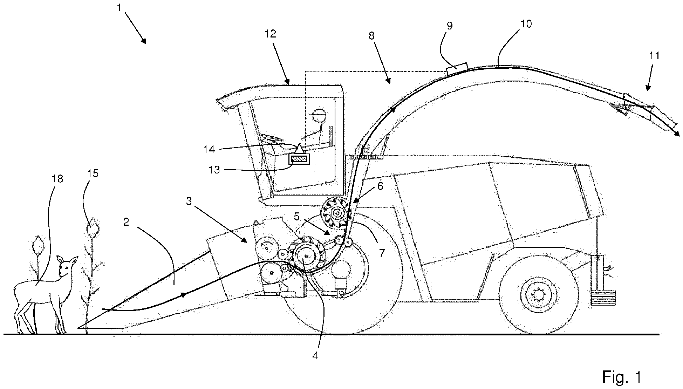

Fig. 1 zeigt eine landwirtschaftliche Erntemaschine in Form eines selbstfahrenden Feldhäckslers 1 gemäß einem bevorzugten Ausführungsbeispiel der Erfindung. Um auf dem Feld wachsenden Pflanzenbestand 15 zu ernten, verfügt der Feldhäcksler 1 über ein Vorsatzgerät 2, das die Pflanzen abschneidet und in Form eines Gutstroms einem mit rotierenden Vorpresswalzen ausgestatteten Einzugsaggregat 3 zuführt. Nach dortiger Vorpressung gelangt das Erntegut 10 in ein Häckselaggregat 4, wo durch Zusammenwirkung einer mit Messern bestückten Häckseltrommel gegenüber einer ruhenden Gegenschneide (jeweils nicht bezeichnet) eine Zerkleinerung auf eine gewünschte Schnittlänge stattfindet. Dem Häckselaggregat 4 schließen sich in Gutstromrichtung (angedeutet durch die Pfeilrichtung des Ernteguts 10 durch die Maschine) eine Konditioniereinrichtung 5 sowie ein Nachbeschleuniger 6 an, die in einem hinter einer Fahrerkabine 12 aufsteigenden Förderschacht 7 angeordnet sind. Der Förderschacht 7 mündet in einem Auswurfkrümmer 8, der zur Überladung des die Bearbeitungs- und Förderorgane 3, 4, 5 durchlaufenen Ernteguts 10 in einen (nicht gezeigten) Ladebehälter dient. Eine am maschinenabgewandten Ende des Auswurfkrümmers 8 angeordnete Auswurfklappe 11 ermöglicht eine Auswurfrichtungssteuerung des aus dem Auswurfkrümmer 8 austretenden Erntegutstrahls. Zur Lenkung und allgemeinen Steuerung des selbstfahrenden Feldhäckslers 1 nimmt ein Bediener in der Fahrerkabine 12 Platz.

Wie in Fig. 1 angedeutet, halten sich im Pflanzenbestand 15 gelegentlich Tiere auf, im gezeigten Beispiel ein Reh 18. Trotz sorgfältiger Überwachung kann es tragischerweise zu Kollisionen mit den Tieren kommen, die abhängig von den jeweiligen Ernteumständen (Dunkelheit, hoher Pflanzenbestand, starker Geräuschpegel) sogar unbemerkt stattfinden können. Bei einem solchen Vorfall gelangen tierische Substanzen über die Bearbeitungs- und Förderorgane des Feldhäckslers 1 in das Erntegut 10. Wenn das Erntegut 10 anschließend in einem Silo gelagert wird, um später als Tierfutter genutzt zu werden, verursacht die Beimischung der tierischen Substanzen eine Unverträglichkeit der Silage. Beispielsweise erkranken bzw. verenden Milchkühe dann an Botulismus. Nach der Ernte ist es äußerst schwierig bzw. unmöglich, in der Silage verseuchte Bereiche ausfindig zu machen. Folglich entsteht durch derartige Wildunfälle unter anderem ein erheblicher wirtschaftlicher Schaden.

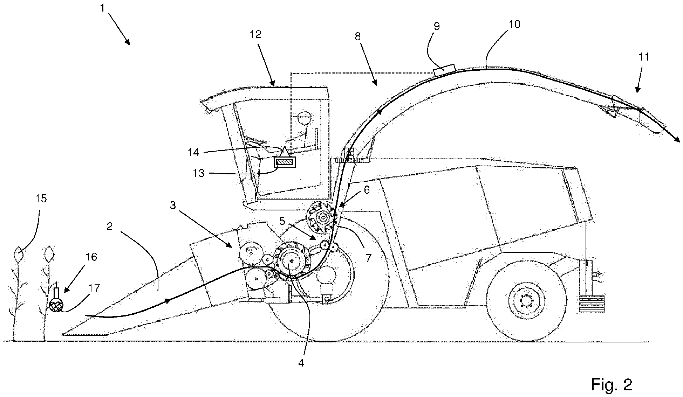

Wie in Fig. 2 angedeutet, kann es daneben vorkommen, dass aus Sabotagegründen von Dritten im Pflanzenbestand 15 Behälter 16 und/oder sonstige Gegenstände versteckt werden, die eine chemische Substanz 17 enthalten. Die chemische Substanz 17 ist beispielsweise so beschaffen, dass diese nach Förderung und Verarbeitung im Feldhäcksler 1 das ausgeworfene Erntegut 10 in einer Weise beeinflusst, dass eine mit dem Erntegut 10 beabsichtigte Biogasproduktion erheblich verschlechtert ist. Dies ist beispielsweise der Fall, wenn es sich bei der chemischen Substanz 17 um Haushaltsreiniger handelt. Der so verursachte wirtschaftliche Schaden kann beträchtlich sein, wenn große Mengen von Erntegut 10 unbemerkt verunreinigt werden.

Der erfindungsgemäße Feldhäcksler 1 gemäß den Fig. 1 und 2 verfügt zur Schadensminderung in den jeweils beschriebenen Fällen über eine Sensoranordnung 9, die im bearbeiteten Erntegut 10 enthaltene Gefahrenstoffe erkennt. Im Fall der Fig. 1 handelt es sich bei dem Gefahrenstoff um eine tierische Substanz (z.B. Blut, Fleisch, Knochen) eines erfassten Tiers, im Fall der Fig. 2 um eine chemische Substanz 17. Zur Erkennung des jeweiligen Gefahrenstoffs wird das den Auswurfkrümmer 8 durchströmende Erntegut 10 im rückenseitigen Bereich des Auswurfkrümmers 8, also an der gebogenen Außenwand, an welcher das bearbeitete Erntegut 10 entlang gleitet, optisch erfasst. Die Sensoranordnung 9 umfasst dazu eine (nicht dargestellte) Beleuchtungsquelle zur Bestrahlung des Ernteguts 10 mit kurzwelligem Infrarotlicht sowie eine Optik zur Leitung und Bündelung des Lichts. Ein der Sensoranordnung 9 zugeordneter Detektor (nicht gezeigt) erfasst das vom Erntegut 10 reflektierte Strahlungsspektrum. Eine von der Sensoranordnung 9 durchgeführte Analyse des Spektrums dient dazu, Informationen über das mögliche Vorhandensein eines Gefahrenstoffs im Erntegut 10 abzuleiten. Dies kann beispielsweise in einer Auswerteinheit durch Vergleich des empfangenen Strahlungsspektrums mit abgespeicherten Werten erfolgen.

In dem in der Fig. 2 gezeigten Fall steht eine Erfassung und Zerstörung des Behälters 16 (bzw. sonstigen Gegenstands) mit der darin enthaltenen chemischen Substanz 17 durch den fahrenden Feldhäcksler 1 unmittelbar bevor. Bei Weiterfahrt und Verarbeitung im Feldhäcksler 1 ergießt sich die chemische Substanz 17 im Erntegut 10 bzw. vermischt sich mit diesem. Die vorgesehene auf der NIR-Technik basierende Sensoranordnung 9 erkennt dann aufgrund kontinuierlicher Überwachung des vorbei geförderten Ernteguts 10 die im Erntegut 10 enthaltene chemische Substanz 17 als Gefahrenstoff.

Wie durch die gepunktete Leitung angedeutet kann die Sensoranordnung 9 in diesem Fall ein Signal an die damit verbundene Ausgabeeinrichtung 13 senden, so dass der Maschinenbediener über das Vorhandensein eines Gefahrenstoffs 17 informiert ist. Die Ausgabe kann beispielsweise optisch über ein Display und zusätzlich akustisch hörbar erfolgen, so dass der Maschinenbediener auch während der aufmerksamen Verfolgung anderer Vorgänge schnellstmöglich von der Gefahr Kenntnis erlangt. Vorteilhaft wird der Bediener dabei auch über die Art des Gefahrenstoffs und ggf. über dessen relative Menge im Erntegut 10 informiert.

In vorteilhafter Weise werden die Informationen mittels einer Einrichtung 14 ortsbezogen dokumentiert. Die Einrichtung 14 ist dazu mit einem satellitengestützten Empfänger und einer Speichereinrichtung ausgestattet, so dass sich die jeweilige Fundstelle des Gefahrenstoffs 17 lokalisieren und speichern lässt.

Mit der Sensoranordnung 9 sind alternativ oder ergänzend zu der chemischen Substanz 17 auch andere Gefahrenstoffe erkennbar. Gemäß dem in Fig. 1 skizzierten Fall können auch tierische Substanzen (Tierblut etc.) im Erntegut 10 erkannt werden, die aufgrund einer Kollision mit einem Tier 18 oder auf sonstige Weise in die Förder- und Bearbeitungsorgane 3, 4, 5 des Feldhäckslers 1 gelangen. Da es beispielsweise im Rahmen des Häckselns von Gras vorkommt, dass Tiere bereits beim vorbereitenden Mähen des Grases getötet werden und dies bei nachfolgenden Arbeitsgängen wie Wenden und Schwaden nicht bemerkt wird, können tierische Substanzen - neben der Kollision mit einem lebenden Tier - auch auf diesem Wege in das Erntegut gelangen, indem nämlich das bereits getötete Tier beim eigentlichen Häckseln versteckt im Grasschwad liegt.

Abweichend vom gezeigten Feldhäcksler 1 sei angemerkt, dass auch Erntemaschinen wie Mähdrescher, Ballenpressen oder sonstige Erntemaschinen, die einen Erntegutstrom bearbeiten und fördern, unter Erzielung der erfindungsgemäßer Wirkungen und Vorteile mit einer Sensoranordnung zur Erkennung von Gefahrenstoffen im Erntegut ausgestattet sein können.

### Bezugszeichenliste

- 1: Feldhäcksler
- 2: Vorsatzgerät
- 3: Einzugsaggregat
- 4: Häckselaggregat
- 5: Konditioniereinrichtung
- 6: Nachbeschleuniger
- 7: Förderschacht
- 8: Auswurfkrümmer
- 9: Sensoranordnung
- 10: Erntegut
- 11: Auswurfklappe
- 12: Fahrerkabine
- 13: Anzeigeeinheit
- 14: Datenverarbeitungseinheit
- 15: Pflanzenbestand
- 16: Behälter
- 17: chemische Substanz
- 18: Reh

## Patentansprüche

1. Landwirtschaftliche Erntemaschine (1) mit zumindest einem Arbeitsaggregat (3, 4, 5) zur Bearbeitung und Förderung von Erntegut (10), und mit einer Sensoranordnung (9) die betreibbar ist, das Erntegut (10) im nahen Infrarotbereich spektroskopisch zu analysieren,
**dadurch gekennzeichnet, dass** die Sensoranordnung (9) im bearbeiteten Erntegut (10) enthaltene Gefahrenstoffe (17, 18) erkennt.

2. Erntemaschine nach Anspruch 1, **dadurch gekennzeichnet, dass** es sich bei dem Gefahrenstoff um eine das Erntegut (10) hinsichtlich der Verfütterung an Tiere unverträglich machende Substanz (18) handelt.

3. Erntemaschine nach Anspruch 1 oder 2, **dadurch gekennzeichnet, dass** es sich bei dem Gefahrenstoff um eine tierische Substanz (18) handelt.

4. Erntemaschine nach einem der Ansprüche 1 bis 3, **dadurch gekennzeichnet, dass** es sich bei dem Gefahrenstoff um eine chemische Substanz (17) handelt.

5. Erntemaschine nach einem der Ansprüche 1 bis 4, **dadurch gekennzeichnet, dass** die Sensoranordnung (9) einen optischen Sensor aufweist, der das bearbeitete Erntegut (10) optisch erfasst, um daraus Informationen über das Vorhandensein eines Gefahrenstoffs (17, 18) abzuleiten.

6. Erntemaschine nach Anspruch 5, **dadurch gekennzeichnet, dass** die Information das Vorhandensein eines Gefahrenstoffs (17, 18) als solches beinhaltet.

7. Erntemaschine nach einem der Ansprüche 5 oder 6, **dadurch gekennzeichnet, dass** die Information die Art des Gefahrenstoffs (17, 18) beinhaltet.

8. Erntemaschine nach einem der Ansprüche 5 bis 7, **dadurch gekennzeichnet, dass** die Information eine Menge des Gefahrenstoffes (17, 18) im Erntegut (10) beinhaltet.

9. Erntemaschine nach einem der Ansprüche 1 bis 8, **dadurch gekennzeichnet, dass** die Sensoranordnung (9) neben der Erkennung von Gefahrenstoffen (17, 18) auch zur Erkennung von Eigenschaften des Ernteguts (10) nutzbar ist.

10. Erntemaschine nach einem der Ansprüche 1 bis 9, **dadurch gekennzeichnet, dass** der Sensoranordnung (9) eine Ausgabeeinrichtung (13) zugeordnet ist, die betreibbar ist, eine das Vorhandensein des erkannten Gefahrenstoffs (17, 18) betreffende Information an einen Maschinenbediener auszugeben.

11. Erntemaschine nach Anspruch 10, **dadurch gekennzeichnet, dass** die Ausgabeeinrichtung (13) bei Überschreiten einer kritischen Menge eines erkannten Gefahrenstoffs (17, 18) ein Signal an den Maschinenbediener ausgibt.

12. Erntemaschine nach einem der Ansprüche 1 bis 11, **dadurch gekennzeichnet, dass** bei Überschreiten einer kritischen Menge eines erkannten Gefahrenstoffs (17, 18) eine maschinenbezogene Maßnahme ausgelöst wird.

13. Erntemaschine nach einem der Ansprüche 1 bis 12, **dadurch gekennzeichnet, dass** eine Einrichtung (14) vorgesehen ist, die betreibbar ist, das Vorhandensein von Gefahrenstoffen (17, 18) betreffende Informationen ortsbezogen zu dokumentieren.

## Claims

1. An agricultural harvester (1) comprising at least one working assembly (3, 4, 5) for processing and conveying crop material (10), and a sensor arrangement (9) which is operable to analyse the crop material (10) spectroscopically in the near infrared range,
**characterised In that** the sensor arrangement (9) detects hazardous substances (17, 18) contained in the processed crop material (10).

2. A harvester according to claim 1 **characterised in that** the hazardous substance is a substance which makes the crop material (10) incompatible In respect of feed for animals.

3. A harvester according to claim 1 or claim 2 **characterised in that** the hazardous substance is an animal substance (18).

4. A harvester according to one of claims 1 to 3 **characterised In that** the hazardous substance is a chemical substance (17).

5. A harvester according to one of claims 1 to 4 **characterised in that** the sensor arrangement (9) has an optical sensor which optically detects the processed crop maternal (10) to derive therefrom information about the presence of a hazardous substance (17, 18).

6. A harvester according to claim 5 **characterised in that** the information contains the presence of a hazardous substance (17, 18) as such.

7. A harvester according to one of claims 5 and 6 **characterised In that** the information contains the kind of a hazardous substance (17, 18).

8. A harvester according to one of claims 5 to 7 **characterised in that** the information contains an amount of the hazardous substance (17, 18) in the crop material (10).

9. A harvester according to one of claims 1 to 8 **characterised In that** the sensor arrangement (9) besides detection of hazardous substances (17, 18) can also be used for detecting properties of the crop material (10).

10. A harvester according to one of claims 1 to 9 **characterised in that** associated with the sensor arrangement (9) is an output device (13) operable to output information concerning the presence of the detected hazardous substance (17, 18) to a machine operator.

11. A harvester according to claim 10 **characterised in that** the output device (13) outputs a signal to the machine operator when a critical amount of a detected hazardous substance (17, 18) is exceeded.

12. A harvester according to one of claims 1 to 11 **characterised in that** a machine-related measure is triggered when a critical amount of a detected hazardous substance (17, 18) is exceeded.

13. A harvester according to one of claims 1 to 12 **characterised in that** there is provided a device (14) which is operable to document information concerning the presence of hazardous substances (17, 18) In location-related fashion.

## Revendications

1. Machine agricole de récolte (1) comprenant au moins un organe de travail (3, 4, 5) pour traiteur et transporter du produit récolte (10) et comprenant un agencement de capteur (9) qui est exploitable pour analyser le produit récolte (10) par voie spectroscopique dans la plage du proche infrarouge, **caractérisée en ce que** l'agencement de capteur (9) détecte des matières dangereuses (17, 18) dans le produit récolté (10) traité.

2. Machine de récolte selon la revendication 1, **caractérisée en ce que**, concernant la manière dangereuse, il s'agit d'une substance qui rend le produit récolté (10) impropre à l'alimentation des animaux.

3. Machine de récolte selon la revendication 1 ou 2, **caractérisée en ce que**, concernant la matière dangereuse, il s'agit d'une substance animale (8).

4. Machine de récolte, selon une des revendication 1 à 3, **caractérisée en ce que**, concernant la matière dangereuse, il s'agit d'une substance chimique (17).

5. Machine de récolte selon une des revendication 1 à 4, **caractérisée en ce que** l'agencement de capteur (9) comporte un capteur optique qui détecte optiquement le produit récolté (10) traité afin d'en séduire des informations sur la présence d'une manière dangereuse (17, 18).

6. Machine de récolte selon la revendication 5, **caractérisé en ce que** l'information renferme la présence d'une matière dangereuse (17, 18) en tant que telle.

7. Machine de récolte selon une des revendications 5 ou 6, **caractérisée en ce que** l'information renferme la nature de la matière dangereuse (17, 18).

8. Machine de récolte selon une des revendication 5 à 7, **caractérisée en ce que** l'information renferme une quantité de matière dangereuse (17, 18) dans le produit récolté (10).

9. Machine de récolte selon une des revendications 1 à 8, **caractérisée en ce que**, outre la détection de matières dangereuse (17, 18), l'agencement de capteur (9) est régalement utilisable pour détecter des propriétés du produit récolté (10).

10. Machine de récolte selon une des revendication 1 à 9, **caractérisée en ce qu'**à l'agencement de capteur (9) est associé un équipement de délivrance (13) qui est exploitable pour délivrer à un utilisateur de la machine une information relative à la présence de la matière dangereuse (17, 18).

11. Machine de récolte selon la revendication 10, **caractérisée en ce que**, en cas de dépassement d'une quantité critique d'une matière dangereuse (17, 18) connue, l'équipement de délivrance (13) délivre un signal à l'utilisateur de la machine.

12. Machine de récolte selon une des revendications 1 à 11, **caractérisée en ce que**, en cas de dépassement d'une quantité critique d'une matière dangereuse (17, 18) connue, une mesure liée à machine est déclenchée.

13. Machine de récolte selon une des revendications 1 à 12, **caractérisée en ce qu'**il est prévu un équipement (14) qui est exploitable pour enregistreur de manière localisée des informations relatives à la présence de matières dangereuses (17, 18).
